# EUROPEAN PATENT SPECIFICATION

(11) **EP 4 000 212 B1**
(45) Date of publication and mention of the grant of the patent: **31.01.2024**
(21) Application number: 20840477.2
(22) Date of filing: 07.07.2020
(51) Int. Cl.: H04L 9/00, G06F 21/60, H04W 4/12, G06F 21/71, G06F 21/79, H04L 9/40, H04L 9/08

(54) **SYSTEM, DEVICE AND METHODS FOR SECURE EXCHANGE OF TEXT MESSAGES**
SYSTEM, VORRICHTUNG UND VERFAHREN ZUM SICHEREN AUSTAUSCH VON TEXTNACHRICHTEN
SYSTÈME, DISPOSITIF ET PROCÉDÉS D'ÉCHANGE SÉCURISÉ DE MESSAGES TEXTES

(30) Priority: 15.07.2019 US 201962874053 P
(43) Date of publication of application: 25.05.2022
(73) Proprietor: Mystery Story Technology Ltd., 8533800 Lehavim (IL)
(72) Inventor: SHTENDEL, Yuval, 8533800 Lehavim (IL); GAL, Shmuel, 8532500 Kibbutz Bet Kama (IL); TSIRLIN, Alexey, 8471816 Beer Sheva (IL); SHTENDEL, Ronit, 8533800 Lehavim (IL)
(74) Representative: AWA Denmark A/S
(86) International application number: PCT/IL2020/050758
(87) International publication number: WO 2021/009744

(56) References cited:
- CN-A- 106 998 331
- US-A1- 2010 235 622
- US-A1- 2013 282 904
- US-A1- 2016 006 710
- US-A1- 2016 360 402

## Description

### FIELD OF THE INVENTION

The invention relates to the field of text messages exchange, more specifically, the invention enables a secure exchange of text messages.

### BACKGROUND

Currently, there are various applications for secure exchange of text messages, such applications allow message exchange between two or more end devices with end to end encryption.

However, even though the end to end encryption mechanism provides protection against attacks on the messages along their transmission path from one end device to the other, it does not provide any protection against attacks (such as cyber attacks) on the messages while they are on the end device. As a result, an attacker that penetrates to an end device (such as smartphone, tablet, laptop, PC and the like) may have direct access to the messages (at their plain text format).

Also available there are applications and software solutions that intend to provide protection against penetration to such end devices, however, as these end devices are based on complex architectures and may contain numerous applications and software programs, it is very difficult (if at all possible) to provide sufficient long-lasting and effective protection against such penetration attacks.

US 2016/006710 A1 discloses a device for secure peer-to-peer communication for voice and data.

There is a need in the art for systems, devices and methods that can allow secure exchange of text messages between two or more end devices, as well as provide protection against attacks (such as cyber-attacks) on the messages while they are on the end device.

### SUMMARY OF THE INVENTION

The present invention, in embodiments thereof, provides systems, devices and methods that can allow secure exchange of text messages between two or more end devices, as well as provide protection against attacks on the messages while they are on the end device.

In some embodiments, the present invention provides methods, devices, and systems that enable secure exchange of text messages over a communication network (such as, cellular network, internet network) between two or more end devices (such as, external screen) connected to communication units (such as, smartphones), wherein the messages on the end device are protected against attacks.

In some embodiments, there is provided a system for secure exchange of text messages between end devices, the system may include: two or more end devices (each may be connected to a separate communication unit, wherein the communication units have an access to a communication network). In some embodiments, the system may also include one or more servers with an internet access.

According to some embodiments, there is provided a device for secure exchange of text messages, the device may include one or more of: a display module, a text input module, a communication interface module (connected to an external communication unit via wire/wireless connection), a cryptographic module and one or more Central Processing Units (CPU) with ROM/WPM based code memory. In some embodiments the end device may further include a battery or any other suitable power source.

In some embodiments, there is provided a method for secure exchange of text messages, the method may include end to end message encryption. In some embodiments the end to end message encryption may include generating a new encryption key for every new communication session.

In some embodiments, the exchanged messages and the encryption key are stored only in volatile memory (such as RAM).

In some embodiments at the end of a communication session, the session encryption key and the exchanged messages within that session are permanently deleted from the end device, for example by applying a power cycle shutdown and/or overwrite the volatile memory with random data.

According to some embodiments, the disclosed methods, devices, and systems are advantageous over currently used methods, devices, and systems for message exchange, as they allow or have the ability to not only protect the messages along their transmission path from one end device to the other, but also protect the messages while they are on the end device.

According to some embodiments, there is provided a method for secure exchange of text messages between two or more end devices, the method may include one or more of the steps of: connecting and pairing an end device with a communication unit; starting of a communication session; secure exchanging of text messages; and terminating of the communication session.

In some embodiments, the end device(s) used with the method includes: a display module; a text input module; a communication interface module; a cryptographic module; and Central Processing Unit (CPU) having ROM/WPM based code memory.

In some embodiments the method may further include a step of registration.

In some embodiments, starting a communication session may include the steps of:
creating a communication link between two or more communication units; and
exchanging communication session encryption key between the participating end devices.

In some embodiments, connecting and pairing an end device to a communication unit may further include an authentication step.

In some embodiments, connecting and pairing an end device to a communication unit may further include verifying that the end device is authorised to connect to that specific communication unit.

In some embodiments, secure exchanging of text messages may include sending and/or receiving text messages.

In some embodiments, sending text messages may include writing/composing a message on the end device; encrypting the message on the end device; and sending the encrypted message to the participating end devices via an external communication unit.

In some embodiments, receiving text messages may include receiving the encrypted message by the participating end devices via their external communication units; decrypting the message (only when it is on the end device); displaying (and/or narrating) the decrypted message on the end devices.

In some embodiments terminating of a communication session may include: permanently deleting the session encryption key and the exchanged messages within that session from the end device; closing the communication link of the communication unit; and disconnecting the end device from the communication unit.

In some embodiments, terminating of the communication session is initiated from the end device.

In some embodiments, terminating of the communication session is initiated from the communication unit.

In some embodiments, terminating of the communication session is initiated by the end user.

In some embodiments, terminating of the communication session is initiated after the max session duration timer has expired.

In some embodiments, terminating of the communication session is initiated after the session inactive timer has expired.

In some embodiments, terminating of the communication session is initiated as a result of communication failure.

In some embodiments, terminating of the communication session is initiated by a command (distributed via the communication units).

According to some embodiments, there is provided a device for secure exchange of text messages, the device may include one or more of: a display module; a text input module; a communication interface module; a cryptographic module; and Central Processing Unit (CPU) with ROM/WPM based code memory.

In some embodiments, the device is capable of executing a method for secure exchange of text messages, the method may include: starting a communication session; sending and/or receiving a text message; and terminating the communication session.

In some embodiments, the device may further include a battery.

In some embodiments, the display module and/or the text input module are a touchscreen.

In some embodiments, the Central Processing Unit (CPU) executes its instructions directly from a Read Only Memory (ROM) or Write Protected Memory.

In some embodiments, the Central Processing Unit (CPU) may be divided to two or more separate Central Processing Units.

In some embodiments, the separate Central Processing Units may include: a display CPU, a cryptographic CPU, and a text input CPU.

In some embodiments, at least one of the Central Processing Units (CPU) may be configured to execute the instructions directly from a Read Only Memory (ROM) or Write Protected Memory.

In some embodiments, the display CPU may be internally connected to a communication interface module via unidirectional connection only (out of the communication interface module into the display CPU).

In some embodiments, the text input CPU may be internally connected to a communication interface module via unidirectional connection only (out of the text input CPU into the the communication interface module).

According to some embodiments, there is provided a system for secure exchange of text messages, the system may include: two or more end devices, each configured to be connected to a separate communication unit. In some embodiments, the device may include one or more of: a display module, a text input module, a communication interface module, a cryptographic module, Central Processing Unit (CPU) with ROM/WPM based code memory, said device may be capable of executing steps in a method for secure exchange of text messages. In some embodiments, the method for secure exchange of text messages may include: connecting and pairing an end device with a communication unit; starting a communication session; sending and/or receiving a text message; and terminating the communication session. In some embodiments, terminating of the communication session may include: permanently deleting the session encryption key and the exchanged messages within that session from the end device; closing the communication link of the communication unit; and disconnecting the end device from the communication unit.

In some embodiments, the system may further include one or more servers.

In some embodiments, the communication units may have an internet access.

In some embodiments, the communication unit may be selected from a smartphone, a tablet, a laptop, a PC, or any combination thereof.

In some embodiments, the communication unit may establish and terminate a communication link with other communication units and/or with server(s).

In some embodiments, the communication unit may include a dedicated application for communication link creation and termination.

In some embodiments, the communication units may be connected to the end devices using wired and/or wireless connection.

In some embodiments, the wired connection may be via USB.

In some embodiments, the wireless connection may be via Bluetooth.

Further embodiments, features, advantages and the full scope of applicability of the present invention will become apparent from the detailed description and drawings given hereinafter. However, it should be understood that the detailed description, while indicating preferred embodiments of the invention, are given by way of illustration only, since various changes and modifications within the scope of the invention will become apparent to those skilled in the art from this detailed description.

### BRIEF DESCRIPTION OF THE DRAWING

Some embodiments of the invention are described herein with reference to the accompanying Figs. The description, together with the Figs. makes apparent to a person having ordinary skill in the art how some embodiments may be practiced. The Figs. are for the purpose of illustrative description and no attempt is made to show structural details of an embodiment in more detail than is necessary for a fundamental understanding of the invention. For the sake of clarity, some objects depicted in the Figs. are not to scale.
**Fig. 1****.** Shows illustration of a block diagram of a system for secure exchange of text messages between end devices, according to some embodiments;
**Fig. 2****.** Shows illustration of a block diagram of a device for secure exchange of text messages connected to an external communication unit, according to some embodiments;
**Fig. 3****.** Shows illustration of a block diagram of a device for secure exchange of text messages connected to an external communication unit, according to some embodiments: and
**Fig. 4****.** Shows illustration of steps in a method for secure exchange of text messages, according to some embodiments.

### DETAILED DESCRIPTION OF THE INVENTION

The present invention, in embodiments thereof, provides systems, devices and methods that can allow secure exchange of text message(s) between two or more end devices, as well as provide protection against attacks (such as cyber-attacks) on the messages while they are on the end device.

To facilitate understating, the following terms are defined:
As used herein, the term "volatile memory" refers to a memory that requires power to maintain the stored information, when the power is interrupted the stored data is lost.

As used herein, the term "plain text" refers to a text at its original format (before it has been encrypted).

As used herein, the term "communication session" refers to a state wherein two or more end devices securely exchange text messages. The state starts when a link between the end devices is created/established and ends when the link is terminated.

As used herein, the term "communication unit" refers to an external unit that is connected at one side to an end device and at the other side to the communication network, hence provides the end device connection to the communication network.

As used herein, the term "selected communication units" refers to the communication units which participate in a communication session.

As used herein, the term "max session duration" refers to the maximal allowed time period of a single communication session.

As used herein, the term "session inactive" refers to an idle time period within an ongoing communication session in which there is no incoming or outgoing message transfer.

As used herein, the term "Write Protected Memory" (WPM) refers to a memory that does not support any remote update to its content, in order to update the WPM content, one must have physical access to the end device, and manually change the hardware settings (for example by placing a jumper).

In some embodiments the terms "device" and "end device" can be interchangeably used.

According to some embodiments, there is provided a system for secure exchange of text messages between end devices, the system includes: two or more end devices, each connected to a separate communication unit, wherein the communication units have an access to a communication network; and optionally one or more servers with an internet access. Each possibility is a separate embodiment.

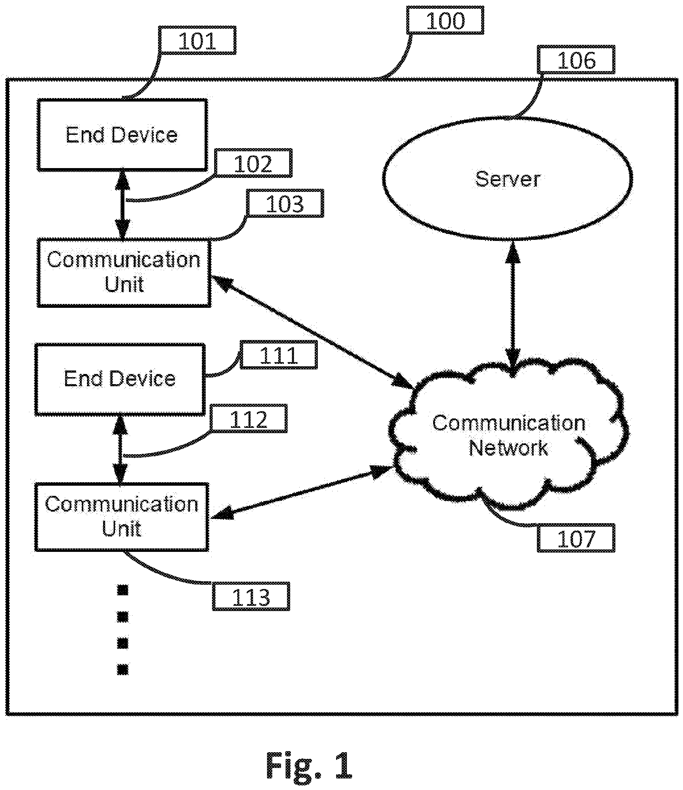

Reference is made to **Fig. 1****,** which illustrates a block diagram of a system for secure exchange of text messages between end devices, according to some embodiments. As shown in **Fig. 1****,** system 100 can include the following elements: end devices 101, 111 capable of executing a method for secure exchange of text messages; and communication units 103, 113. The system may further include server(s) 106.

In some embodiments, the communication units 103, 113, can each be for, example a smartphone, a tablet, a laptop, a PC, and the like. In some embodiments, the communication units may have an access to the communication network 107. In some embodiments, a communication unit may have the ability to create and terminate a communication link with other communication units and/or with server(s) 106, for example by using a dedicated application.

In some embodiments, the connection 102, 112 between an end device 101, 102 and the respective communication unit 103, 113 may be wired (such as, for example, by USB connection) or wireless (such as, for example, by Bluetooth connection).

In some embodiments, end devices 101, 111 are protected against attacks on their CPU firmware.

In some embodiments, the server(s) 106 may have access to the internet 107, or external network.

According to some embodiments, there is provided a device for secure exchange of text messages, the device may include one or more of: a display module, a text input module, a communication interface module (connected to an external communication unit via wire/wireless connection), a cryptographic module and one or more Central Processing Units (CPU) with ROM/WPM based code memory. In some embodiments the end device may further include a power supply, such as, a battery. Each possibility is a separate embodiment.

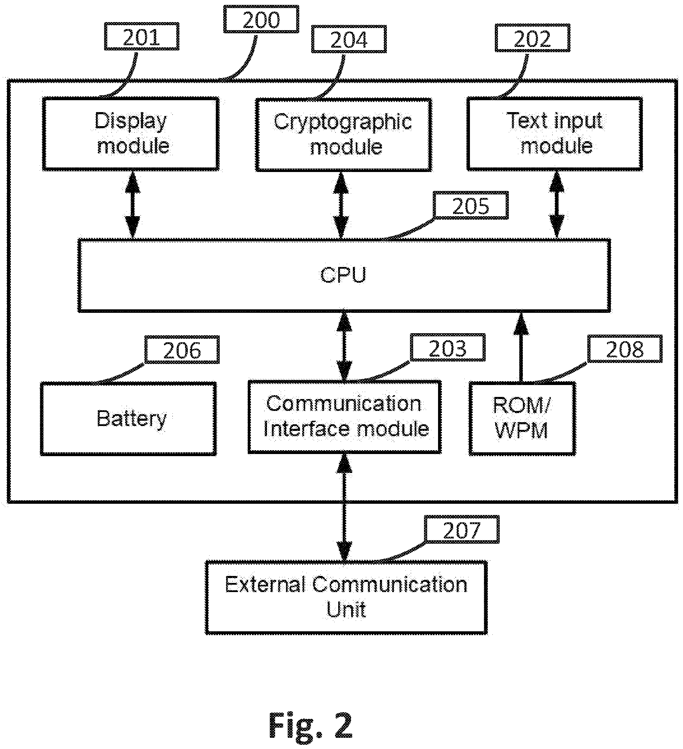

Reference is made to **Fig. 2****,** which illustrates a block diagram of a device for secure exchange of text messages connected to an external communication unit, according to some embodiments. As shown in **Fig. 2****,** device 200 may include the following elements and modules: a display module 201, a text input module 202, a communication interface module 203, a cryptographic module 204 and a Central Processing Unit 205 with ROM/WPM based code memory 208. In some embodiments the device may further include a battery 206.

In some embodiments, the display module 201 can be used by the CPU 205 to display the messages. In some embodiments the display module 201 can be, for example, an LCD screen, an OLED screen, a touch screen, and the like. In some embodiments the text input module 202 can be used by the CPU 205 to type in the message(s). In some embodiments the text input module 202 can be, for example, a keyboard. In some embodiments a touchscreen can serve as both display and text input modules.

In some embodiments, the cryptographic module 204, can be used by the CPU 205 for generating encryption keys, encrypting the outgoing messages and decrypting the incoming messages.

In some embodiments, a communication interface module 203 is used to connect the device 200 to an external communication unit 207. The connection may be wired connection (such as USB) or wireless connection (such as Bluetooth).

In some embodiments, the CPU 205 executes its instructions directly from a Read Only Memory (ROM) or Write Protected Memory 208. Such architecture prevents from potential attackers to tamper with the CPU firmware and gain access to the messages at their plain text format.

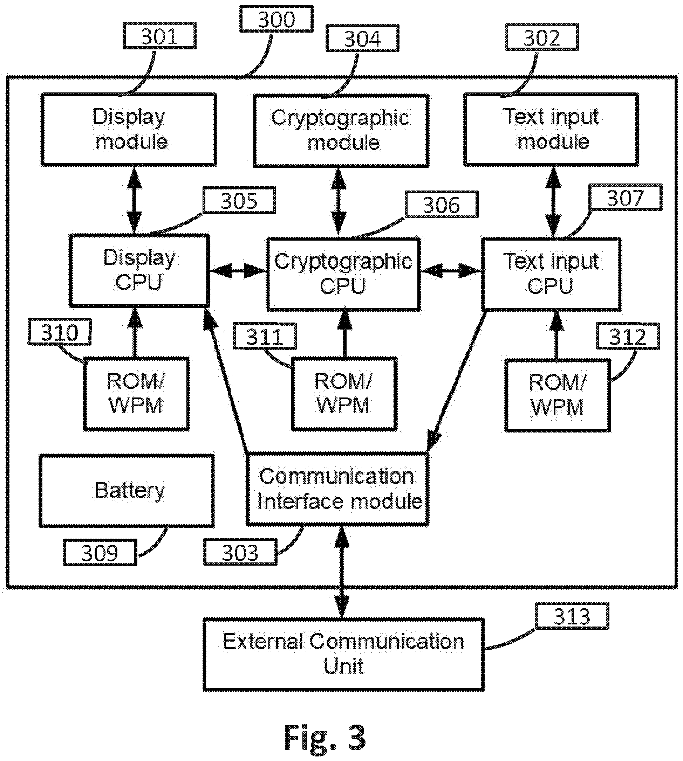

Reference is made to **Fig. 3****,** which illustrates a block diagram of a device for secure exchange of text messages connected to an external communication unit, according to some embodiments. As shown in **Fig. 3****,** device 300 may include the following elements and modules: a display module 301, a text input module 302, a communication interface module 303, a cryptographic module 304, a display Central Processing Unit 305 with ROM/WPM based code memory 310, a cryptographic Central Processing Unit 306 with ROM/WPM based code memory 311 and a text input Central Processing Unit 307 with ROM/WPM based code memory 312. In some embodiments the device may further include a battery 309.

In some embodiments the display module 301 can be used by the display Central Processing Unit 305 to display the messages. In some embodiments the display module 301 can be for example an LCD screen, an OLED screen, touch screen, and the like. In some embodiments the text input module 302 can be used by the text input Central Processing Unit 307 to type in the messages. In some embodiments the text input module 302 can be, for example, a keyboard.

In some embodiments, the cryptographic module 304, can be used by the cryptographic Central Processing Unit 306 for generating encryption keys, encrypting the outgoing messages and decrypting the incoming messages.

In some embodiments, a communication interface module 303 is used to connect the device 300 to an external communication unit 313. The connection may be wired connection (such as USB) or wireless connection (such as Bluetooth).

In some embodiments, the internal connection between the communication interface module 303 and the display CPU 305 is unidirectional only (out of the communication unit into the display CPU). In some embodiments, the internal connection between the communication interface module 303 and the text input CPU 307 is unidirectional only (out of the text input CPU into the communication interface module), such architecture provides better isolation between the display CPU 305 and the text input CPU 307, and helps to prevent unintentional leakage of data.

In some embodiments, at least one of CPUs (such as 305, 306, 307) executes the instructions directly from a Read Only Memory (ROM) or Write Protected Memory (such as, 310, 311, 312, respectively), such architecture prevents from potential attackers to tamper with the CPUs firmware and gain access to the decrypted messages.

According to some embodiments, there is provided a method for secure exchange of text messages, the method may include one or more of the steps of:
i. registration;
ii. connecting and pairing an end device with a communication unit;
iii. starting of communication session;
iv. securing exchange of text messages;
v. terminating communication session.

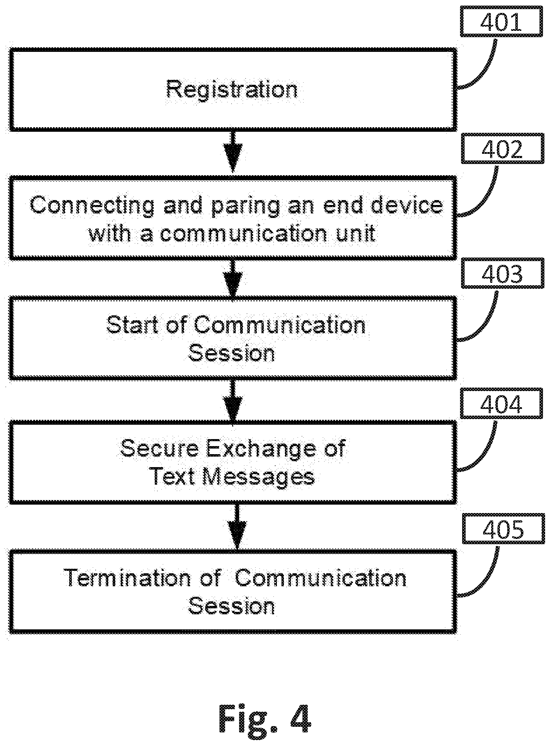

Reference is now made to **Fig. 4****,** which illustrates steps in methods of the present disclosure, according to some embodiments. At step 401, registration of a user may be performed. Next, at step 402, connecting and pairing an end device with a communication unit may be performed. At step 403, a communication session may be started. At step 404, text messages can be securely exchanged between end devices participating in the communication session. At the last step 405, the communication session may be terminated.

The embodiments presented below provide an exemplary description of the various steps/functions supported/executed by the methods of the present disclosure, and their implementation in the suitable devices and systems.

### Registration

In some embodiments, registration step 401, may be performed after a dedicated application for creation and termination of a communication link is installed on the communicating unit (for example, a smartphone). In some embodiments, the registration step may include providing user details such as, for example, user name, address, phone number, etc. The registered phone number may be validated by means known in the art, for example, by sending a text message (such as SMS) to the phone.

In some embodiments, user details may further include serial number(s) of the user's end device(s).

In some embodiments, once the registration process is complete, the user can start communication sessions and securely exchange text messages with other registered users.

### Connecting and pairing an end device with a communication unit.

In some embodiments, connecting and pairing an end device to a communication unit, may be completed only after successfully passing an authentication process (for example by entering a correct password, fingerprint, face recognition, and the like).

In some embodiments, the end device can be connected and paired with any available communication unit capable of creating and terminating a communication link with other communication units and/or with server(s).

In some embodiments, the end device can be limited to connect and pair only with specific communication units.

### Start of a communication session.

In some embodiments, starting of a communication session step 403, may include one or more of the sub steps of: creating a communication link between two or more communication units ("selected communication units"); exchanging encryption key of the communication session between the end devices which are connected to the selected communication units.

### Secure exchange of text messages.

In some embodiments, secure exchange of text messages step 404, may include sending and/or receiving messages.

In some embodiments, sending a message may include one or more of the steps of: write a message on the end device; encrypt the message (while it is on the end device) using the encryption key of the communication session; send the encrypted message to the end devices which are part of the communication session (via the communication units).

In some embodiments, receiving a message may include one or more of the steps of: receive the encrypted message by the end device (via its communication unit); decrypt the message (when it is on the end device) using the encryption key of the communication session; display (and/or narrate) the decrypted message on the end device.

In some embodiments, all the messages are protected with end to end encryption along the entire transmission path (including on the communication units), and the only place that messages exist at their plain text format is on the end devices.

In some embodiments, the exchanged messages and the encryption key are stored only in volatile memory (such as RAM).

### Termination of a communication session.

In some embodiments, termination of a communication session step 405, may include: permanently deleting the encryption key of the communication session from the end device (for example by applying a power cycle and/or overwrite the volatile memory with random data); permanently deleting all the messages of the communication session from the end device; closing the communication link between the communication unit to the other selected communication units; and disconnecting the end device from the communication unit.

In some embodiments, termination of a communication session can be initiated from the end device.

In some embodiments, termination of a communication session can be initiated from the communication unit.

In some embodiments, termination of a communication session can be initiated by an end user.

In some embodiments, termination of a communication session can be initiated after the max session duration timer has expired.

In some embodiments, termination of a communication session can be initiated after the session inactive timer has expired.

In some embodiments, termination of a communication session can be initiated as a result of a communication failure.

In some embodiments, a command for termination of a communication session can be distributed (via the communication units) to end devices which were part of the communication session.

The processes and displays presented herein are not inherently related to any particular computer or other apparatus. Various general-purpose systems may be used with programs in accordance with the teachings herein, or it may prove convenient to construct a more specialized apparatus to perform the desired method(s). The desired structure(s) for a variety of these systems appear from the description below. In addition, embodiments of the present disclosure are not described with reference to any particular programming language. It will be appreciated that a variety of programming languages may be used to implement the teachings of the present disclosure as described herein.

Although steps of methods according to some embodiments may be described in a specific sequence, methods of the disclosure may include some or all of the described steps carried out in a different order. A method of the disclosure may include a few of the steps described or all of the steps described. No particular step in a disclosed method is to be considered an essential step of that method, unless explicitly specified as such.

The foregoing description of the specific embodiments will so fully reveal the general nature of the invention that others can, by applying current knowledge, readily modify and/or adapt for various applications such specific embodiments without undue experimentation and without departing from the generic concept, and, therefore, such adaptations and modifications should and are intended to be comprehended within the meaning and range of equivalents of the disclosed embodiments. Although the invention has been described in conjunction with specific embodiments thereof, it is evident that many alternatives, modifications and variations will be apparent to those skilled in the art. Accordingly, it is intended to embrace all such alternatives, modifications and variations that fall within the scope of the appended claims.

## Claims

1. A method for secure exchange of text message(s) between two or more end devices, the method comprising:
connecting and pairing an end device with a communication unit, which is an external unit that is connected at one side to an end device and at the other side to a communication network, thereby providing the end device with a connection to a communication network;
starting of a communication session;
secure exchanging of text message(s); and
terminating of the communication session,
wherein the end device comprises: a display module; a text input module; a communication interface module; a cryptographic module; and a Central Processing Unit (CPU) having Read Only Memory (ROM) or Write Protected Memory (WPM) based code memory,
wherein a Write Protected Memory (WPM) comprises a memory that does not support any remote update to its content but requires physical access to the end device, and a manual change of the hardware settings in order to update the WPM content;
wherein the Central Processing Unit (CPU) is divided to two or more separate Central Processing Units; wherein the separate Central Processing Units comprises: a display CPU, a cryptographic CPU, and a text input CPU;
wherein at least one of the Central Processing Units (CPU) is configured to execute the instructions directly from the Read Only Memory (ROM) or Write Protected Memory (WPM);
wherein the display CPU is internally connected to a communication interface module via unidirectional connection only, out of the communication interface module into the display CPU; and
wherein the text input CPU is internally connected to a communication interface module via unidirectional connection only, out of the text test input CPU into the communication interface module.

2. The method of claim 1, wherein the method further comprises a step of registration.

3. The method of any one of claims 1-2, wherein connecting and pairing an end device to a communication unit further comprises an authentication step; and/or verification that the end device is authorised to connect to the communication unit.

4. The method of any one of claims 1-3, wherein starting of a communication session comprises:
- creating a communication link between two or more communication units and
- exchanging communication session encryption key between the participating end devices.

5. The method of any one of claims 1-4, wherein exchanging text message(s) comprises sending text messages, the sending comprises:
- writing a message on the end device;
- encrypting the message on the end device; and
- sending the encrypted message to participating end devices via a communication unit.

6. The method of any one of claims 1-4, wherein exchanging text message(s) comprises receiving text messages, the receiving comprises:
- receiving the encrypted message by the participating end devices via their external communication units;
- decrypting the message, only when it is on the end device; and
- displaying, and/or narrating the decrypted message on the end devices.

7. The method of any one of claims 1-6, wherein terminating of the communication session comprises:
- permanently deleting the session encryption key and the exchanged messages within the communication session from the end device;
- closing the communication link of the communication unit; and
- disconnecting the end device from the communication unit.

8. The method of any one of claims 1-7, wherein terminating of the communication session is initiated from the end device; and/or
wherein terminating of the communication session is initiated from the communication unit; and/or
wherein terminating of the communication session is initiated by the end user and/or
wherein terminating of the communication session is initiated after a max session duration timer has expired; and/or
wherein terminating of the communication session is initiated after a session inactive timer has expired; and/or
wherein terminating of the communication session is initiated as a result of communication failure; and/or
terminating of the communication session is initiated by a command, distributed via the communication units.

9. A device for secure exchange of text messages, the device comprising:
a display module;
a text input module;
a communication interface module;
a cryptographic module; and
a central processing unit (CPU) having ROM/WPM based code memory;
wherein a Write Protected Memory (WPM) is a memory that does not support any remote update to its content but requires physical access to the end device and a manual change of the hardware settings in order to update the WPM content;
wherein the device is capable of executing a method for secure exchange of text messages, the method comprising:
connecting and pairing an end device with a communication unit, which is an external unit that is connected at one side to an end device and at the other side to a communication network, thereby providing the end device with a connection to a communication network;
starting of a communication session;
secure exchange of test message(s); and
terminating of the communication session;
wherein the Central Processing Unit (CPU) is divided to two or more separate Central Processing Units; and
wherein the separate Central Processing Units comprises: a display CPU, a cryptographic CPU, and a text input CPU; and
wherein at least one of the Central Processing Units (CPU) is configured to execute the instructions directly from a Read Only Memory (ROM) or Write Protected Memory (WPM), wherein a Write Protected Memory (WPM) is a memory that does not support any remote update to its content but requires physical access to the end device and a manual change the hardware settings in order to update the WPM content;
wherein the display CPU is internally connected to a communication interface module via unidirectional connection only, out of the communication interface module into the display CPU; and
wherein the text input CPU is internally connected to a communication interface module via unidirectional connection only, out of the text input CPU into the communication interface module.

10. A system for secure exchange of text messages, the system comprising:
two or more end devices according to claim 9, each configured to be connected to a separate communication unit.

11. The system of claim 10, wherein the system further comprises one or more servers.

12. The system of any one of claims 10-11, wherein the communication unit have an access to a communication network.

13. The system of any one of claims 10-12, wherein the communication unit is selected from a smartphone, a tablet, a laptop, a PC, or any combination thereof.

14. The system of any one of claims 10-13, wherein the communication unit comprises a dedicated application for communication link creation and termination.

15. The system of any one of claims 10-14, wherein the communication unit is capable of establishing and terminating a communication link with other communication units and/or with server(s); and/or
wherein the communication units are connected to the end devices using wired and/or wireless connection.

## Patentansprüche

1. Verfahren zum sicheren Austausch von Textnachrichten zwischen zwei oder mehr Endgeräten, wobei das Verfahren umfasst:
Verbinden und Koppeln eines Endgeräts mit einer Kommunikationseinheit, die eine externe Einheit ist, die auf einer Seite mit einem Endgerät und auf der anderen Seite mit einem Kommunikationsnetzwerk verbunden ist, wodurch das Endgerät mit einer Verbindung zu einem Kommunikationsnetzwerk bereitgestellt wird;
Starten einer Kommunikationssitzung;
sicheres Austauschen von Textnachrichten; und
Beenden der Kommunikationssitzung,
wobei das Endgerät umfasst: ein Anzeigemodul; ein Texteingabemodul; ein Kommunikationsschnittstellenmodul;
ein kryptografisches Modul; und eine zentrale Verarbeitungseinheit (CPU) mit einem Nur-Lese-Speicher (ROM) oder einen auf einem schreibgeschützten Speicher (WPM) basierten Codespeicher,
wobei ein schreibgeschützter Speicher (WPM) einen Speicher umfasst, der keine Fernaktualisierung seines Inhalts unterstützt, aber einen physischen Zugriff auf das Endgerät erfordert, und eine manuelle Änderung der Hardwareeinstellungen, um den WPM-Inhalt zu aktualisieren;
wobei die zentrale Verarbeitungseinheit (CPU) in zwei oder mehr separate zentrale Verarbeitungseinheiten unterteilt ist; wobei die separaten zentralen Verarbeitungseinheiten umfassen: eine Anzeige-CPU, eine kryptografische CPU und eine Texteingabe-CPU;
wobei mindestens eine der zentralen Verarbeitungseinheiten (CPU) dazu ausgelegt ist, die Anweisungen direkt aus dem Nur-Lese-Speicher (ROM) oder schreibgeschützten Speicher (WPM) auszuführen;
wobei die Anzeige-CPU intern mit einem Kommunikationsschnittstellenmodul nur über eine unidirektionale Verbindung aus dem Kommunikationsschnittstellenmodul in die Anzeige-CPU verbunden ist; und
wobei die Texteingabe-CPU intern mit einem Kommunikationsschnittstellenmodul nur über eine unidirektionale Verbindung aus der Texteingabe-CPU in das Kommunikationsschnittstellenmodul verbunden ist.

2. Verfahren nach Anspruch 1, wobei das Verfahren ferner einen Schritt der Registrierung umfasst.

3. Verfahren nach einem der Ansprüche 1 bis 2, wobei das Verbinden und Koppeln eines Endgerätes mit einer Kommunikationseinheit ferner einen Authentifizierungsschritt umfasst; und/oder Verifizierung, dass das Endgerät berechtigt ist, sich mit der Kommunikationseinheit zu verbinden.

4. Verfahren nach einem der Ansprüche 1 bis 3, wobei das Starten einer Kommunikationssitzung umfasst:
- Erstellen eines Kommunikationslinks zwischen zwei oder mehreren Kommunikationseinheiten und
- Austauschen von Verschlüsselungscodes für Kommunikationssitzungen zwischen den beteiligten Endgeräten.

5. Verfahren nach einem der Ansprüche 1 bis 4, wobei das Austauschen von Textnachrichten das Senden von Textnachrichten umfasst, wobei das Senden umfasst:
- Schreiben einer Nachricht auf dem Endgerät;
- Verschlüsseln der Nachricht auf dem Endgerät; und
- Senden der verschlüsselten Nachricht an die beteiligten Endgeräte über eine Kommunikationseinheit.

6. Verfahren nach einem der Ansprüche 1 bis 4, wobei das Austauschen von Textnachrichten das Empfangen von Textnachrichten umfasst, wobei das Empfangen umfasst:
- Empfangen der verschlüsselten Nachricht durch die beteiligten Endgeräte über ihre externen Kommunikationseinheiten;
- Entschlüsseln der Nachricht, nur wenn sie sich auf dem Endgerät befindet; und
- Anzeigen und/oder Erzählen der entschlüsselten Nachricht auf den Endgeräten.

7. Verfahren nach einem der Ansprüche 1 bis 6, wobei das Beenden der Kommunikationssitzung umfasst:
- permanentes Löschen des Sitzungsverschlüsselungsschlüssels und der ausgetauschten Nachrichten innerhalb der Kommunikationssitzung von dem Endgerät;
- Schließen des Kommunikationslinks der Kommunikationseinheit; und
- Trennen des Endgerätes von der Kommunikationseinheit.

8. Verfahren nach einem der Ansprüche 1 bis 7, wobei das Beenden der Kommunikationssitzung von dem Endgerät initiiert wird; und/oder
wobei das Beenden der Kommunikationssitzung von der Kommunikationseinheit xxinitiiert wird; und/oder
wobei das Beenden der Kommunikationssitzung durch den Endbenutzer initiiert wird und/oder
wobei das Beenden der Kommunikationssitzung initiiert wird, nachdem ein Zeitgeber für die maximale Sitzungsdauer abgelaufen ist; und/oder
wobei das Beenden der Kommunikationssitzung initiiert wird, nachdem ein sitzungsinaktiver Zeitgeber abgelaufen ist; und/oder
wobei das Beenden der Kommunikationssitzung als Ergebnis eines Kommunikationsfehlers initiiert wird; und/oder
das Beenden der Kommunikationssitzung durch einen über
die Kommunikationseinheiten verteilten Befehl initiiert wird.

9. Vorrichtung zum sicheren Austausch von Textnachrichten, wobei die Vorrichtung umfasst:
ein Anzeigemodul;
ein Texteingabemodul;
ein Kommunikationsschnittstellenmodul;
ein kryptografisches Modul; und
eine zentrale Verarbeitungseinheit (CPU) mit einem ROM/WPM-basierten Codespeicher;
wobei ein schreibgeschützter Speicher (WPM) ein Speicher ist, der keine Fernaktualisierung seines Inhalts unterstützt, sondern einen physischen Zugriff auf das Endgerät und eine manuelle Änderung der Hardwareeinstellungen erfordert, um den WPM-Inhalt zu aktualisieren;
wobei die Vorrichtung in der Lage ist, ein Verfahren zum sicheren Austausch von Textnachrichten auszuführen, wobei das Verfahren umfasst:
Verbinden und Koppeln eines Endgerätes mit einer Kommunikationseinheit, die eine externe Einheit ist, die auf einer Seite mit einem Endgerät und auf der anderen Seite mit einem Kommunikationsnetzwerk verbunden ist, wodurch das Endgerät mit einer Verbindung zu einem Kommunikationsnetzwerk bereitgestellt wird;
Starten einer Kommunikationssitzung;
sicheren Austausch von Testnachrichten; und
Beenden der Kommunikationssitzung;
wobei die zentrale Verarbeitungseinheit (CPU) in zwei oder mehr separate zentrale Verarbeitungseinheiten unterteilt ist; und
wobei die getrennten zentralen Verarbeitungseinheiten umfassen: eine Anzeige-CPU, eine kryptografische CPU und eine Texteingabe-CPU; und
wobei zumindest eine der zentralen Verarbeitungseinheiten (CPU) dazu ausgelegt ist, die Anweisungen direkt aus einem Nur-Lese-Speicher Speicher (ROM) oder schreibgeschützter Speicher (WPM) auszuführen, wobei ein schreibgeschützter Speicher (WPM) ein Speicher ist, der keine Fernaktualisierung seines Inhalts unterstützt, aber physischen Zugriff auf das Endgerät und eine manuelle Änderung der Hardwareeinstellungen erfordert, um den WPM-Inhalt zu aktualisieren;
wobei die Anzeige-CPU intern mit einem Kommunikationsschnittstellenmodul nur über eine unidirektionale Verbindung aus dem Kommunikationsschnittstellenmodul in die Anzeige-CPU verbunden ist; und
wobei die Texteingabe-CPU intern mit einem Kommunikationsschnittstellenmodul nur über eine unidirektionale Verbindung aus der Texteingabe-CPU in das Kommunikationsschnittstellenmodul verbunden ist.

10. System zum sicheren Austausch von Textnachrichten, wobei das System umfasst:
zwei oder mehr Endgeräte nach Anspruch 9, die jeweils dazu ausgelegt sind, mit einer separaten Kommunikationseinheit verbunden zu werden.

11. System nach Anspruch 10, wobei das System ferner einen oder mehrere Server umfasst.

12. System nach einem der Ansprüche 10 bis 11, wobei die Kommunikationseinheit einen Zugriff auf ein Kommunikationsnetzwerk hat.

13. System nach einem der Ansprüche 10 bis 12, wobei die Kommunikationseinheit aus einem Smartphone, einem Tablet, einem Laptop, einem PC oder einer Kombination davon ausgewählt ist.

14. System nach einem der Ansprüche 10 bis 13, wobei die Kommunikationseinheit eine dedizierte Anwendung zum Erstellen und Beenden eines Kommunikationslinks umfasst.

15. System nach einem der Ansprüche 10 bis 14, wobei die Kommunikationseinheit in der Lage ist, eine Kommunikationsverbindung mit anderen Kommunikationseinheiten und/oder mit Server (n) aufzubauen und zu beenden; und/oder
wobei die Kommunikationseinheiten mit den Endgeräten unter Verwendung einer drahtgebundenen und/oder drahtlosen Verbindung verbunden sind.

## Revendications

1. Procédé pour l'échange sécurisé de messages de texte entre deux, ou davantage, dispositifs d'extrémité, le procédé comprenant les étapes suivantes :
connecter et apparier un dispositif d'extrémité à une unité de communication, qui est une unité externe connectée d'un côté à un dispositif d'extrémité et de l'autre côté à un réseau de communication, fournissant ainsi au dispositif d'extrémité une connexion à un réseau de communication ;
démarrer une session de communication ;
échanger de manière sécurisée un ou plusieurs messages de texte ; et
mettre fin à la session de communication,
où le dispositif d'extrémité comprend : un module d'affichage ; un module d'entrée de texte ; un module d'interface de communication ; un module cryptographique ; et une unité centrale de traitement (CPU) dotée d'une mémoire morte (ROM) ou d'une mémoire de code basée sur une mémoire protégée contre l'écriture (WPM),
où une mémoire protégée contre l'écriture (WPM) comprend une mémoire qui ne prend pas en charge la mise à jour à distance de son contenu, mais nécessite un accès physique au dispositif d'extrémité et une modification manuelle des paramètres matériels afin de mettre à jour le contenu de la mémoire WPM ;
où l'unité centrale de traitement (CPU) est divisée en deux unités centrales de traitement distinctes, ou davantage ; où les unités centrales de traitement distinctes comprennent : une CPU d'affichage, une CPU de cryptographie et une CPU d'entrée de texte ;
où au moins une des unités centrales de traitement (CPU) est configurée pour exécuter les instructions directement à partir de la mémoire morte (ROM) ou de la mémoire protégée contre l'écriture (WPM) ;
où la CPU d'affichage est connectée en interne à un module d'interface de communication par l'intermédiaire d'une connexion unidirectionnelle uniquement, hors du module d'interface de communication dans la CPU d'affichage ; et
la CPU d'entrée de texte est connectée en interne à un module d'interface de communication par l'intermédiaire d'une connexion unidirectionnelle uniquement, hors de la CPU d'entrée de texte dans le module d'interface de communication.

2. Procédé selon la revendication 1, dans lequel le procédé comprend en outre une étape d'enregistrement.

3. Procédé selon l'une quelconque des revendications 1 et 2, dans lequel la connexion et l'appairage d'un dispositif d'extrémité à une unité de communication comprennent en outre une étape d'authentification ; et/ou la vérification que le dispositif d'extrémité est autorisé à se connecter à l'unité de communication.

4. Procédé selon l'une quelconque des revendications 1 à 3, dans lequel le démarrage d'une session de communication comprend les étapes suivantes :
- créer une liaison de communication entre deux, ou davantage, unités de communication, et
- échanger une clé de cryptage de session de communication entre les dispositifs d'extrémité participants.

5. Procédé selon l'une quelconque des revendications 1 à 4, dans lequel l'échange de un ou plusieurs messages de texte comprend l'envoi de messages de texte, l'envoi comprenant les étapes suivantes :
- écrire un message sur le dispositif d'extrémité ;
- chiffrer le message sur le dispositif d'extrémité ; et
- envoyer le message crypté aux dispositifs d'extrémité participants par l'intermédiaire d'une unité de communication.

6. Procédé selon l'une quelconque des revendications 1 à 4, dans lequel l'échange de messages de texte comprend la réception de messages de texte, la réception comprenant les étapes suivantes :
- recevoir le message crypté par les dispositifs d'extrémité participants par l'intermédiaire de leurs unités de communication externes ;
- décrypter le message, uniquement lorsqu'il se trouve sur le dispositif d'extrémité ; et
- afficher et/ou raconter le message décrypté sur les dispositifs d'extrémité.

7. Procédé selon l'une quelconque des revendications 1 à 6, dans lequel la fin de la session de communication comprend les étapes suivantes :
- supprimer de manière permanente la clé de cryptage de la session et les messages échangés dans la session de communication sur le dispositif d'extrémité ;
- fermer le lien de communication de l'unité de communication ; et
- déconnecter le dispositif d'extrémité de l'unité de communication.

8. Procédé selon l'une quelconque des revendications 1 à 7, dans lequel l'interruption de la session de communication est initiée par le dispositif d'extrémité ; et/ou
dans lequel l'interruption de la session de communication est initiée par l'unité de communication ; et/ou
dans lequel l'interruption de la session de communication est initiée par l'utilisateur final ; et/ou
dans lequel l'interruption de la session de communication est initiée après l'expiration d'un minuteur de durée maximale de la session ; et/ou
dans lequel l'interruption de la session de communication est initiée après l'expiration d'un délai d'inactivité de la session ; et/ou
dans lequel l'interruption de la session de communication est initiée à la suite d'une défaillance de communication ; et/ou
l'interruption de la session de communication est initiée par une commande distribuée par l'intermédiaire des unités de communication.

9. Dispositif pour l'échange sécurisé de messages de texte, le dispositif comprenant :
un module d'affichage ;
un module d'entrée de texte ;
un module d'interface de communication ;
un module de cryptographie ; et
une unité centrale de traitement (CPU) dotée d'une mémoire de code basée sur une ROM/WPM ;
où une mémoire protégée en écriture (WPM) est une mémoire qui ne prend pas en charge la mise à jour à distance de son contenu, mais nécessite un accès physique au dispositif d'extrémité et une modification manuelle des paramètres matériels afin de mettre à jour le contenu de la mémoire WPM ;
où le dispositif est capable d'exécuter un procédé d'échange sécurisé de messages de texte, le procédé comprenant les étapes suivantes :
connecter et apparier un dispositif d'extrémité à une unité de communication, qui est une unité externe connectée d'un côté à un dispositif d'extrémité et de l'autre côté à un réseau de communication, fournissant ainsi au dispositif d'extrémité une connexion à un réseau de communication ;
démarrer une session de communication ;
échanger de manière sécurisée des messages de test ; et
mettre fin à la session de communication ;
où l'unité centrale de traitement (CPU) est divisée en deux unités centrales de traitement distinctes, ou davantage ; et
où les unités centrales de traitement distinctes comprennent : une CPU d'affichage, une CPU de cryptographie et une CPU d'entrée de texte ; et
où au moins une des unités centrales de traitement (CPU) est configurée pour exécuter les instructions directement à partir d'une mémoire morte (ROM) ou d'une mémoire protégée en écriture (WPM), une mémoire protégée en écriture (WPM) étant une mémoire qui ne prend pas en charge la mise à jour à distance de son contenu, mais qui nécessite un accès physique à au dispositif d'extrémité et une modification manuelle des paramètres matériels pour mettre à jour le contenu de la mémoire WPM ;
où la CPU d'affichage est connectée en interne à un module d'interface de communication par l'intermédiaire d'une connexion unidirectionnelle uniquement, hors du module d'interface de communication dans la CPU d'affichage ; et
la CPU d'entrée de texte est connectée en interne à un module d'interface de communication par l'intermédiaire d'une connexion unidirectionnelle uniquement, hors de la CPU d'entrée de texte dans le module d'interface de communication.

10. Système d'échange sécurisé de messages de texte, le système comprenant :
deux, ou davantage, dispositifs d'extrémité selon la revendication 9, chacun étant configuré pour être connecté à une unité de communication séparée.

11. Système selon la revendication 10, dans lequel le système comprend en outre un ou plusieurs serveurs.

12. Système selon l'une quelconque des revendications 10 et 11, dans lequel l'unité de communication a accès à un réseau de communication.

13. Système selon l'une quelconque des revendications 10 à 12, dans lequel l'unité de communication est sélectionnée parmi un smartphone, une tablette, un ordinateur portable, un PC, ou toute combinaison de ceux-ci .

14. Système selon l'une quelconque des revendications 10 à 13, dans lequel l'unité de communication comprend une application dédiée à la création et à la clôture d'une liaison de communication.

15. Système selon l'une quelconque des revendications 10 à 14, dans lequel l'unité de communication est capable d'établir et de mettre fin à une liaison de communication avec d'autres unités de communication et/ou avec les un ou plusieurs serveurs ; et/ou
dans lequel les unités de communication sont connectées aux dispositifs d'extrémité à l'aide d'une connexion câblée et/ou sans fil.
